Europäisches Patentamt

European Patent Office

Office européen des brevets

(19)

(11) Numéro de publication: **0 151 890**
**B1**

# (12)  FASCICULE DE BREVET EUROPEEN

(45) Date de publication du fascicule du brevet:
**03.08.88**

(21) Numéro de dépôt: **84400533.0**

(22) Date de dépôt: **15.03.84**

(51) Int. Cl.⁴: **C 04 B  28/16,** C 04 B  22/14

(54) **Compositions de promoteurs pour accélérer la prise hydraulique de l'anhydrite et procédés pour l'utilisation de ces compositions.**

(30) Priorité: **03.02.84  FR 8401712**

(43) Date de publication de la demande:
**21.08.85 Bulletin 85/34**

(45) Mention de la délivrance du brevet:
**03.08.88 Bulletin 88/31**

(84) Etats contractants désignés:
**BE DE FR LU**

(56) Documents cités:
**DE - C - 74 868**
**FR - A - 683 681**
**FR - A - 1 335 001**
**FR - A - 2 329 607**
**GB - A - 16 560**

**Comprehensive Inorganic Chemistry, Pergamon Press (1973), p. 1006**

(73) Titulaire: **SOCIETE MOSELLANE D'ANHYDRITE,
F-57380 Faulquemont (FR)**

(72) Inventeur: **Brice, Jean-François, 1 allée de Venise
Résidence La Lyre, F-54500 Vandoeuvre les Nancy (FR)**
Inventeur: **Delporte, Corine, avenue Mangin Résidence
les Jonquilles, F-54000 Nancy (FR)**
Inventeur: **Evrard, Omer, 13 avenue du Vieux Château,
F-54500 Vandoeuvre les Nancy (FR)**

(74) Mandataire: **Combe, André, CABINET BEAU DE
LOMENIE 55, rue d'Amsterdam, F-75008 Paris (FR)**

## Revendications

La présente invention concerne des compositions de promoteurs pour accélérer la prise hydraulique de l'anhydrite et les procédés pour l'utilisation de ces compositions.

On a déjà décrit l'utilisation d'un anhydrite auquel on ajoute de l'eau et un promoteur sulfaté en vue de la réalisation, après prise, de digues et de piliers de soutènement dans l'exploitation des mines.

Comme promoteur sulfaté, on a déjà préconisé l'emploi de sulfates de métaux, tels que le zinc ou le fer (et, plus particulièrement, de sulfate ferreux) seuls ou de préférence en mélange avec du sulfate de potassium. Les brevets français n° 2 329 607 et n° 2 475 528 décrivent des modes particuliers de mise en œuvre préférentiels de cet art antérieur.

L'étude systématique de ces promoteurs sulfatés et de leur mode d'action a prouvé

– d'une part que, parmi les produits qui se forment, lors de la réaction des divers composés du promoteur, le sulfate cristallin de fer et de potassium dénommé jarosite – ayant pour formule: $Fe_3K (SO_4)_2 (OH)_6 \cdot nH_2O$ – paraît jouer un rôle essentiel dans la «promotion» de la prise de l'anhydrite. En effet, l'oxydation lente en milieu aqueux des ions ferreux en ions ferriques entraîne la précipitation de ce sel peu soluble sous forme de grains, de taille allant de 0,5 à 5 µm; la jarosite constitue un germe de cristallisation favorisant la formation de cristaux de gypse à faciès tabulaire, très fortement désorientés, d'où une imbrication très poussée ne pouvant que favoriser la bonne cohésion du matériau;

– d'autre part que l'on peut effectivement accélérer le phénomène de prise hydraulique de l'anhydrite en favorisant ou accélérant la formation de cette jarosite.

La présente invention concerne donc un procédé pour accélérer la prise hydraulique de l'anhydrite caractérisé en ce que l'on ajoute au mélange d'anhydrite et d'eau, des cristaux de jarosite.

Mais il est également possible d'ajouter à l'anhydrite ou au mélange d'anhydrite et d'eau, des substances libérant les ions formateurs de la jarosite.

C'est pourquoi l'invention concerne également un procédé pour accélérer la prise hydraulique d'anhydrite caractérisé en ce que le mélange d'anhydrite et d'eau est réalisé en présence d'au moins une substance donnant naissance à des ions sulfate, d'au moins une substance donnant naissance à des ions potassium, d'au moins une substance donnant naissance à des ions fer divalent, et d'au moins une substance présentant vis-à-vis desdits ions fer divalent, un pouvoir d'oxydation en ions fer trivalents, cette substance à pouvoir oxydant étant choisie parmi les ions nitrate, chlorate, hypochlorite et péroxosels, les diverses substances choisies facilitant la formation de jarosite.

En effet, les moyens pour accélérer la formation de jarosite impliquent:

– tout d'abord que le promoteur (ou catalyseur) comporte les substances nécessaires pour conduire, en présence d'eau, à la formation de cette jarosite, ces substances étant essentiellement les ions alcalins (de préférence) potassium, les ions fer et les ions sulfate;

– ensuite, que ces ions soient sous la forme la plus appropriée; jusqu'à ce jour, on a préconisé l'utilisation de sulfate ferreux, sous forme plus ou moins hydratée (monohydrate ou heptahydrate); il a été trouvé qu'il était souhaitable d'utiliser le fer, sous forme de fer trivalent, ou d'utiliser, avec un sel de fer divalent, un oxydant susceptible d'assurer assez rapidement la transformation (oxydation) du fer divalent en fer trivalent.

Parmi les produits qui possèdent ledit pouvoir d'oxydation, on citera notamment, les ions nitrate, chlorate, hypochlorite et les peroxosels; les ions nitrate sont les plus faciles à mettre en œuvre.

Ainsi, selon l'invention, le promoteur (ou catalyseur) pourra être constitué, de façon non limitative, par:

– des cristaux de jarosite
– des mélanges de chlorure ferrique et de sulfate de potassium
– des mélanges de chlorure de potassium, de sulfate ferreux et de chlorate
– des mélanges de sulfate de potassium et de nitrate ferrique
– des mélanges de sulfate ferreux, sulfate de potassium et de nitrate d'ammonium (ou sodium)
– ou par des mélanges de sulfate ferreux et de nitrate de potassium, des derniers mélanges étant, pour des raisons économiques notamment, préférés.

Les proportions respectives des divers constituants de promoteur (lorsque celui-ci contient plus d'un constituant) sont variables, mais il est préférable que les proportions des divers ions en solution aqueuse soient les suivantes: trois ions fer pour un ion alcalin et deux ions sulfate, tout en étant conscient du fait qu'une concentration plus élevée en sulfate ne peut être que bénéfique puisqu'elle permet la sursaturation de la solution.

Lorsqu'on utilise le mélange préféré, à savoir: le sulfate ferreux et le nitrate de potassium, il a été trouvé que ledit mélange pouvait avantageusement comporter environ 1 partie en poids de nitrate de potassium pour environ 3 parties en poids de sulfate ferreux, ledit mélange étant utilisé à raison d'environ 0,5 à 3 parties en poids, pour environ 100 parties en poids d'anhydrite.

Il est connu, par ailleurs, que certains additifs, utilisables avec le promoteur et en quantité jusqu'à environ 1 partie en poids (par rapport à l'anhydrite), peuvent avoir un effet bénéfique sur la prise hydraulique de l'anhydrite catalysée par le promoteur.

Bien évidemment, ces additifs peuvent être présents avec le ou les promoteurs. Parmi ces additifs, on peut citer les alumines et oxydes ferriques, anhydres ou hydroxylés, qui favorisent la cristallisation tabulaire du gypse. D'autres additifs, tels que les terres de diatomées et la silice, qui n'ont pas d'influence directe sur les résistances à la compression, peuvent cependant être utiles dans la fluidité et la stabilité du promoteur. Il est également réputé que les terres de diatomées suppriment le rôle inhibiteur des impuretés organiques et des fluorures qui peuvent se trouver dans l'anhydrite.

Mais on a trouvé également qu'un autre produit cristallin, la syngénite (de formule $K_2SO_4$, $CaSO_4$, $H_2O$) pouvait avoir un effet bénéfique sur la prise de l'anhydrite. En effet, la formation de cristaux de syngénite (sous forme de fines aiguilles enchevêtrées) au niveau des fractures d'anhydrite ne peut que favoriser la solubilisation de ce matériau par consommation d'ions calcium et sulfate au niveau des gros grains et constituer, de plus, un lien entre l'anhydrite non consommée lors de la prise et les cristaux de gypse qui prennent naissance sur la jarosite.

Il est donc parfois souhaitable, en plus des composés susceptibles de donner rapidement naissance à la jarosite, d'ajouter, au mélange promoteur, au moins un produit facilitant l'apparition rapide de la syngénite. Compte tenu de la présence d'alcalin (tel que le potassium), dans les mélanges promoteurs selon l'invention, il est donc parfois souhaitable d'ajouter, auxdits mélanges, un composé soluble pouvant donner naissance, en présence d'eau, à des ions calcium. Une telle substance peut être présente dans l'anhydrite naturelle sous forme de carbonate de calcium ou de dolomie; un pourcentage massique en $CaCO_3$ de l'ordre de 4% dans l'anhydrite constitue un facteur favorable pour la prise; une teneur trop élevée en carbonate n'est pas souhaitable, car elle entraîne un dégagement de gaz carbonique formant des cavités sphériques dont l'importante concentration ne peut que fragiliser le matériau. Dans le cas d'une anhydrite pure exempte de $CaCO_3$, il peut être judicieux d'ajouter dans le promoteur un sel soluble de calcium, tel que $CaCl_2$, la chaux, le plâtre, à titre d'exemples, sans caractère limitatif.

On a décrit divers modes d'utilisation des promoteurs (ou mélanges de promoteurs) avec l'anhydrite. On peut, dans le cas de la présente invention et en supposant que l'on utilise comme promoteur le mélange de sulfate ferreux et de nitrate de potassium, envisager les modes d'utilisation suivants:

– mélange à l'état solide de l'anhydrite et des deux constituants du promoteur puis injection d'eau. Ce mode de mise en œuvre implique que le taux d'humidité de l'anhydrite ne soit pas trop important, en tout cas inférieur à 2%. Compte tenu de la réactivité du promoteur, il sera souhaitable d'utiliser du sulfate ferreux sans eau adsorbée et on veillera à ce que le temps de stockage du mélange solide anhydrite-promoteur soit compatible avec un degré d'humidité tel que le début de prise hydraulique ne présente aucun inconvénient quant au transport du matériau sur le lieu d'utilisation.

– mélange d'anhydrite et de sulfate ferreux et injection dans ledit mélange d'une solution aqueuse de nitrate de potassium.

– mélange d'anhydrite et de nitrate de potassium et injection dans ledit mélange d'une solution aqueuse de sulfate ferreux.

– injection dans l'anhydrite d'une solution aqueuse contenant simultanément du nitrate de potassium et du sulfate ferreux (solution fraîchement préparée) ou de deux solutions aqueuses contenant l'une le nitrate de potassium et l'autre le sulfate ferreux.

Bien évidemment, les quantités d'eau utilisées sont, dans le procédé de la présente invention, du même ordre de grandeur que les quantités d'eau précédemment utilisées, c'est-à-dire, en poids, entre 5 et 15 parties d'eau pour 100 parties d'anhydrite.

On a également décrit l'influence de la granulométrie de l'anhydrite sur la vitesse de prise et les propriétés mécaniques des produits obtenus.

Cette influence a été confirmée dans le cadre de la présente invention et on a trouvé qu'il était souhaitable que, pour une anhydrite de pureté d'environ 90%, au moins 30% en poids des particules d'anhydrite passent au travers d'un tamis de 0,25 mm, si cette quantité de «fines» dépasse environ 50%, il semble que les résultats obtenus sont moins bons.

Selon une autre caractéristique de l'invention, la composition du promoteur de prise peut être modulée en fonction de la vitesse de prise hydraulique de l'anhydrite souhaitée. Le brevet français n° 2 475 528 préconise, entre autres, l'utilisation d'un catalyseur contenant 3 parties de sulfate ferreux pour une partie (en poids) de sulfate d'alcalin; dans ce catalyseur, la substitution progressive du sulfate alcalin par une quantité équivalente en poids de nitrate alcalin (potassium de préférence) aboutit à des prises hydrauliques de l'anhydrite dont les résistances à la compression augmentent dans le rapport de 1 à 3 environ au bout de 5 h, et de 1 à 2 environ au bout de 24 h. En ce sens, un promoteur qui contient 3 parties de sulfate ferreux, (1–x) parties de sulfate de potassium et x parties de nitrate de potassium constitue en soi une amélioration des procédés existants.

Les exemples non limitatifs ci-après servent à illustrer la composition et les performances des promoteurs de l'invention.

Exemple 1

– Echantillon d'anhydrite de Faulquemont de pureté voisine de 95% (environ 3% de carbonates et moins de 1% de gypse) et de granulométrie définie par 30% de fines passant au tamis de 250 μm, les plus gros grains ne dépassant pas 8 mm.

– Promoteur constitué de 70% de catalyseur classique, oxydé partiellement, pour former la jarosite et de 30% de nitrate de potassium.

(Le catalyseur classique contient 60% de $FeSO_4$, $7H_2O$, 20% de $K_2SO_4$ et 20% d'additifs siliceux.)

– Le mortier est constitué par homogénéisation de 100 parties en poids d'anhydrite, 1,5 parties en poids de promoteur, 9 parties en poids d'eau.

Il est disposé dans des moules parallélépipédiques de 40 mm × 40 mm × 80 mm, et tassé manuellement avec une réglette 40 × 80 mm.

– Les résistances à la compression, mesurées sur une surface de 32 cm², sont de 55 ± 10 bars à 5 h, et de 120 ± 20 bars à 24 h.

Exemple 2

– A 100 parties en poids d'anhydrite de Faulquemont à 95% de pureté, on ajoute 1 partie en poids de $FeSO_4$, $7H_2O$ et on homogénéise; le mortier est constitué en ajoutant à ce mélange 9 g d'une solution aqueuse de nitrate de potassium à 35 g/l.

– Les essais de résistance à la compression, effectués dans les mêmes conditions que pour l'exemple 1, donnent 60 ± 10 bars à 5 h et 140 ± 20 bars à 24 h.

Exemple 3

Des essais réalisés dans les mêmes conditions que les exemples 1 et 2, mais avec une anhydrite naturelle à 85% de pureté (environ 3% de gypse et 11% de carbonates) donnent des résistances à la compression plus faibles: 30 ± 10 bars à 5 h et 90 ± 20 bars à 24 h.

**Revendications**

1. Procédé pour accélérer la prise hydraulique de l'anhydrite caractérisé en ce que le mélange d'anhydrite et d'eau est réalisé en présence d'au moins une substance donnant naissance à des ions sulfate, d'au moins une substance donnant naissance à des ions potassium, d'au moins une substance donnant naissance à des ions fer divalent, et d'au moins une substance présentant vis-à-vis desdits ions fer divalent, un pouvoir d'oxydation en ions fer trivalents, cette substance à pouvoir oxydant étant choisie parmi les ions nitrate, chlorate, hypochlorite et péroxosels, les diverses substances choisies facilitant la formation de jarosite.

2. Procédé selon la revendication 1, caractérisé en ce que le mélange d'anhydrite et d'eau est réalisé en présence de produits accélérateurs de formation de jarosite choisis parmi:
– le chlorure de potassium, le sulfate ferreux et un chlorate;
– le sulfate ferreux, le sulfate de potassium et un nitrate alcalin, et de préférence
– le sulfate ferreux et le nitrate de potassium.

3. Procédé pour accélérer la prise hydraulique de l'anhydrite caractérisé en ce que le mélange d'anhydrite et d'eau est réalisé en présence de produits accélérateurs de formation de jarosite choisis parmi:
– le chlorure ferrique et le sulfate de potassium, et
– le sulfate de potassium et le nitrate ferrique.

4. Procédé selon la revendication 2, caractérisé en ce que l'on utilise des produits donnant naissance, en proportions relatives, à 3 ions fer pour au moins 2 ions sulfate.

5. Procédé selon l'une des revendications 1 et 2, caractérisé en ce que l'on utilise de 0,5 à 3 parties en poids de l'ensemble desdits produits pour environ 100 parties en poids d'anhydrite.

6. Procédé selon l'une des revendications 1 à 4, caractérisé en ce que le mélange d'anhydrite et d'eau est réalisé en outre en présence de produits permettant l'obtention rapide de syngénite.

7. Procédé pour accélérer la prise hydraulique de l'anhydrite caractérisé en ce que l'on ajoute au mélange d'anhydrite et d'eau, des cristaux de jarosite.

**Patentansprüche**

1. Verfahren zur Beschleunigung des hydraulischen Abbindens des Anhydrits, dadurch gekennzeichnet, daß die Mischung von Anhydrit und Wasser in Gegenwart wenigstens eines Sulfationen liefernden Stoffes, wenigstens eines Kaliumionen liefernden Stoffes, wenigstens eines Eisen(II)-Ionen liefernden Stoffes und wenigstens eines Stoffes vorgenommen wird, der gegenüber den Eisen(II)-Ionen ein Oxidationsvermögen zur Eisen(III)-Ionen aufweist, welcher Stoff mit Oxidationsvermögen unter den Nitrat-, Chlorat-, Hypochlorit- und Peroxosalzionen gewählt ist, wobei die verschiedenen gewählten Stoffe die Bildung von Jarosit erleichtern.

2. Verfahren nach dem Anspruch 1, dadurch gekennzeichnet, daß die Mischung von Anhydrit und Wasser in Gegenwart von Jarositbildungs-Beschleunigungsstoffen vorgenommen wird, die gewählt sind unter:
– Kaliumchlorid, Eisen(II)sulfat und einem Chlorat;
– Eisen(II)sulfat, Kaliumsulfat und einem Alkalinitrat; und vorzugsweise
– Eisen(II)sulfat und Kaliumnitrat.

3. Verfahren zur Beschleunigung des hydraulischen Abbindens des Anhydrits, dadurch gekennzeichnet, daß die Mischung von Anhydrit und Wasser in Gegenwart von Jarositbildungs-Beschleunigungsstoffen vorgenommen wird, die gewählt sind unter:
– Eisen(III)chlorid und Kaliumsulfat; und
– Kaliumsulfat und Eisen(III)nitrat.

4. Verfahren nach dem Anspruch 2, dadurch gekennzeichnet, daß man Stoffe verwendet, die in relativen Anteilen 3 Eisenionen für wenigstens 2 Sulfationen liefern.

5. Verfahren nach einem der Ansprüche 1 und 2, dadurch gekennzeichnet, daß man 0,5 bis 3 Gewichtsteile der Gruppe der Stoffe je etwa 100 Gewichtsteile Anhydrit verwendet.

6. Verfahren nach einem der Ansprüche 1 bis 4, dadurch gekennzeichnet, daß die Mischung von Anhydrit und Wasser außerdem in Gegenwart von Stoffen vorgenommen wird, die das rasche Erhalten von Syngenit ermöglichen.

7. Verfahren zur Beschleunigung des hydraulischen Abbindens des Anhydrits, dadurch gekennzeichnet, daß man der Mischung von Anhydrit und Wasser Jarositkristalle zusetzt.

**Claims**

Process for speeding up the hydraulic setting of anhydrite characterized in that the anhydrite and water mixture is produced in the presence of at least one substance causing the formation of sulphate ions, at least one substance causing the formation of potassium ions, at least one substance causing the formation of bivalent iron ions, and at least one substance having, towards said bivalent iron ions, a power of oxidation into trivalent iron ions, said substance with oxidizing power being selected from nitrate, chlorate, hypochlorite, and peroxosalts, the different selected substances promoting the formation of jarosite.

2. Process according to claim 1, characterized in that the mixture of anhydrite with water is produced in the presence of products speeding up the formation of jarosite selected from:

— potassium chloride, ferrous sulphate and a chlorate;

— ferrous sulphate, potassium sulphate, and an alkaline nitrate, and preferably

— ferrous sulphate and potassium nitrate.

3. Process for speeding up the hydraulic setting of anhydrite, characterized in that the mixture of anhydrite with water is produced in the presence of products speeding up the formation of jarosite selected from:

— ferric chloride and potassium sulphate, and

— potassium sulphate and ferric nitrate.

4. Process according to claim 2, characterized in that products are used which cause the formation in relative proportions of 3 iron ions for at least 2 sulphate ions.

5. Process according to claims 1 and 2, characterized in that between 0.5 and 3 parts by weight of all of said products are used for about 100 parts by weight of anhydrite.

6. Process according to claims 1 to 4, characterized in that the mixture of anhydrite and water is also produced in the presence of products permitting instant formation of syngenite.

7. Process for speeding up the hydraulic setting of anhydrite, characterized in that jarosite crystals are added to the mixture of anhydrite and water.